# EUROPÄISCHE PATENTANMELDUNG

(11) **EP 1 491 660 A1**
(43) Veröffentlichungstag der Anmeldung: **29.12.2004**
(21) Anmeldenummer: 03405478.3
(22) Anmeldetag: 27.06.2003
(51) Int. Cl.: C23C 28/00, C23C 30/00, C23C 4/06, C23C 4/10, C23C 4/12, C23C 4/18, A47J 37/10, D06F 75/00, D06F 75/38, B21B 27/00

(54) **Beschichtetes Substrat sowie Verfahren zum Herstellen eines beschichteten Substrats**

(71) Anmelder: EUROFLAMM GmbH, 72160 Horb a.N. (DE)
(72) Erfinder: Bansbach, Hermann, 55270 Särgenloch (DE)
(74) Vertreter: Sulzer Management AG

(57) **Zusammenfassung**

Die Erfindung betrifft ein beschichtetes Substrat (1), umfassend einen bevorzugterweise metallischen Grundkörper (2) sowie eine auf einer Substratoberfläche (3) des Grundkörpers (2) vorgesehene Hartschicht (4), wobei die Hartschicht (4) im wesentlichen denselben thermischen Ausdehnungskoeffizienten wie der Grundkörper (2) hat und bevorzugterweise eine Siliziumlegierung des Metalls des Grundkörper ist. Darüber hinaus betrifft die Erfindung ein Verfahren zur Herstellung eines solchen beschichteten Substrats (1), sowie die Verwendung des Verfahrens zur Herstellung eines Haushaltsgerätes, z.B. eines Bügeleisens oder einer Bratpfanne, oder einer Folienwalze.

## Beschreibung

Die Erfindung betrifft ein beschichtetes Substrat, ein Verfahren zur Herstellung eines beschichteten Substrats, sowie die Verwendung des Verfahrens zur Herstellung eines Haushaltsgeräts oder einer Folienwalze gemäss dem Oberbegriff des unabhängigen Anspruchs der jeweiligen Kategorie.

Das Veredeln von beanspruchten Oberflächen aller Art durch Aufbringen von speziellen Beschichtungen mittels verschiedenster Beschichtungstechniken hat heutzutage in nahezu alle Gebiete der Oberflächentechnik Einzug gehalten.

Dabei werden nicht nur Substrate aus Metall, wie Eisen, Stahl, Aluminium, Kupfer usw. beschichtet, sondern auch das Beschichten von Glas, Keramiken, Kunststoffen, Faserwerkstoffen und vielen anderen Materialien ist durchgängiger Standard. Neben dem Aufbringen einer Schutzschicht aus Farbe, durch Verchromen, oder Verzinken mit den bekannten klassischen Methoden findet die Technik des sogenannten thermischen Spritzens in seinen zahlreichen Varianten immer weitere Verbreitung zum Schutz oder zur Veredelung von Oberflächen. Dabei wird das thermische Spritzen in vielen Bereichen für das Auftragen von Verschleiss-Schutzbeschichtungen auf der Basis von metallischen, karbidhaltigen, keramischen oder Verbundwerkstoffen angewendet. Ein entscheidender Vorteil der Technik des thermischen Spritzen besteht einerseits darin, dass praktisch jedes Basismaterial als Substrat zum Beschichten in Frage kommt. Was vielleicht jedoch noch wichtiger ist, ist die quasi unüberschaubare Zahl ganz unterschiedlicher Werkstoffe, die als Beschichtungsmaterial beim thermischen Spritzen eingesetzt werden können. Insbesondere sind dem Fachmann auch eine ganze Reihe physiologisch unbedenkliche Werkstoffe geläufig, so dass die Technik des thermischen Spritzens sehr erfolgreich auch zur Beschichtung von Produkten eingesetzt werden kann, die mit Menschen oder Tieren unmittelbar in Berührung kommen oder die zum Beispiel unmittelbar mit Lebensmitteln in Kontakt kommen. Praktisch alle Werkstoffe, die eine stabile flüssige (oder gasförmige) Phase aufweisen und in einem geeigneten Pulvergrössenbereich oder in der passenden Form, zum Beispiel als Spritzdraht erhältlich sind, können mit der geeigneten Technik auf nahezu alle Substrate aufgetragen werden, so dass eine sehr grosse Freiheit bei der Wahl des Beschichtungsmaterials und der zu beschichteten Materialien gegeben ist.

Das ist letztlich natürlich auch dadurch bedingt, dass eine ganze Reihe von thermischen Spritzverfahren zur Verfügung stehen, die je nach der Art des zu beschichtenden Substrats und / oder des verwendeten Beschichtungsmaterials ausgewählt werden können. Beispielhaft sei dazu auf die Technik des Drahtflammspritzens, des Lichtbogenspritzens, des Plasmaspritzen und auf das Hochgeschwindigkeitsflammspritzen verwiesen, die dem Fachmann auf dem Gebiet des thermischen Spritzens in ihren verschiedenen Varianten wohlbekannt sind.

Die aufgetragenen Schichten können dabei zum Beispiel Schutz vor Korrosion, thermischer, chemischer oder mechanischer Belastung bieten; es kann sich um Schichten für optische Anwendungen handeln, etwa zur Filterung oder Dämpfung des Sonnenlichts, oder um Schichten zur Verspiegelung optischer Geräte oder Vorrichtungen. Aber auch aus rein ästhetischen Gründen werden auf Gegenstände aller Art, insbesondere auch auf Gebrauchsgegenstände, zunehmend Schichten durch thermische Spritzverfahren aufgebracht.

Besondere Bedeutung hat das thermische Beschichten überall dort, wo empfindliche Oberflächen mechanischen Einwirkungen, wie der Reibung zwischen Gegenlaufpartner, zum Beispiel zwischen Kolben und Kolbenring eines Zylinders einer Brennkraftmaschine oder auch bei Rollen und Walzen zum Bearbeiten von Blechen, Folien usw. ausgesetzt sind. Hier haben sich insbesondere Beschichtungen aus Keramik bzw. mit keramischen Einlagerungen sehr gut bewährt, die eine hervorragende Resistenz gegen abrasive Beanspruchungen aufweisen. Sehr vorteilhaft werden in diesem Sinne auch verbreitet metallische Schichten gespritzt, die keramische und / oder oxidische Partikel enthalten. Solche Schichten haben einerseits ein hervorragendes Haftvermögen, insbesondere auf metallischen Substraten und zeigen trotz einer relativ weichen Metallmatrix, die die aufgespritzte Oberflächenschicht bildet, durch die eingelagerten keramischen oder oxidischen Partikel eine immer noch hervorragende Widerstandskraft gegen mechanische Belastungen wie Reibung, Scheuern, Kratzen oder zum Beispiel beim Bearbeiten mit Schneidwerkzeugen und dergleichen. Darüber hinaus, was bei verschiedenen Anwendungen wichtig ist, zeigen solche Schichten aufgrund der metallischen Grundmatrix noch eine hohe Wärmeleitfähigkeit, was häufig, zum Beispiel bei Haushaltsgegenständen, wie Koch- oder Backgeschirr, Bügeleisen oder dann wenn die Wärme zuverlässig abgeführt oder übertragen werden muss, wie zum Beispiel bei Kochplatten, Backofenauskleidungen, Grillvorrichtungen oder auch bei Rollen oder Walzen während des Walzprozesses, eine erhebliche Rolle spielen kann.

Insbesondere die Beschichtung von Gegenständen aller Art, die neben mechanischen Belastungen auch starken Temperaturbeanspruchungen ausgesetzt sind, wie Haushaltsgegenstände zum Kochen oder Braten, zum Beispiel Bratpfannen, Kochgeschirr bzw. Koch-, Brat- und Backbestecke, oder ganz allgemein von Brat- oder Backoberflächen, z.B. von Backformen oder Backflächen gewinnt immer mehr an Bedeutung. Dasselbe gilt natürliche auch für andere Gegenstände wie beispielsweise für Bügelsohlen von Bügeleisen. Aber auch im industriellen Bereich gibt es zahlreiche Beispiele von Einrichtungen und Gegenständen, die im Betriebszustand thermischen und mechanischen Belastungen gleichermassen ausgesetzt sind und deren empfindliche Oberflächen durch geeignete Beschichtungen geschützt werden müssen. Beispielhaft seien an dieser Stelle Walzen und Rollen verschiedenster Art genannt, die zum Walzen von Blechen, Folien und so weiter eingesetzt werden.

Zusätzlich zu der mechanischen Schutzfunktion der Schichten sind häufig auch gewisse Antihafteigenschaften gefordert. Das trifft insbesondere auf die zuvor erwähnten Haushaltsgeräte zu, an welchen einerseits das Koch-, Back oder Bratgut möglichst nicht haften bleiben soll und die andererseits auch leicht zu reinigen sein sollen, was natürlich beispielsweise auch auf die erwähnten Oberflächen von Öfen oder Grillvorrichtungen zutrifft. Diese Anforderungen werden selbstverständlich auch an die oben erwähnten Rollen und Walzen gestellt. Alle diese Oberflächen sollen in vorgebbaren Grenzen möglichst glatt sein und andererseits jedoch möglichst gute Antihafteigenschaften aufweisen.

Zur Lösung dieser Aufgaben sind aus der Literatur zahlreiche Beschichtungen und entsprechende Verfahren zum Aufbringen solcher Beschichtungen wohlbekannt. So ist in der DE 36 04 762 C3 ein Verfahren zum Beschichten von Küchengefässen gezeigt, bei welcher auf einen mit einer Haftgrundschicht versehenen Grundkörper eine Hartstoffschicht zum Schutz gegen mechanische Belastungen wie Schneiden, Kratzen, Reiben usw. aufgebracht wird. Die Hartstoffschicht kann dabei beispielsweise aus Aluminiumoxid oder aus einer Mischung aus Aluminiumoxid / Titanoxid (zum Beispiel aus 97% Al₂O₃ und 3% TiO₂, eine sogenannte 97/3 Schicht) bestehen. Die Hartstoffschicht ist an ihrer Oberseite mit einer Antihaftschicht versehen, die bevorzugt aus einem Kunststoff auf Polytetraflourethylen (PTFE)-Basis besteht. Die Antihaftschicht wird dabei bevorzugt aufgesprüht und anschliessend eingebrannt. Eine Fortentwicklung der zuvor beschriebenen Schicht wird in der DE 38 06 699 A1 vorgeschlagen. Hier besteht die Hartstoffschicht aus mehreren Lagen, die übereinander unter Verwendung unterschiedlicher Hartstoffpulver aufgebaut werden. Dadurch wird insbesondere die mechanische Stabilität der Hartstoffschicht verbessert.

Obwohl die zuvor beispielhaft aus dem Stand der Technik bekannten Schichten durchaus einen gewissen Schutz gegen mechanische Beeinträchtigungen der empfindlichen Oberflächen gewähren und darüber hinaus auch relativ gute Antihafteigenschaften zeigen, besteht jedoch bei den bekannten Schichten der Nachteil, dass aufgrund thermischer Belastungen die Schichten relativ schnell verschleissen.

Es hat sich nämlich gezeigt, dass unter thermischen Belastungen, also zum Beispiel durch Erhitzen beim Kochen, Backen und Braten oder zum Beispiel bei Rollen und Walzen aufgrund von starker Wärmeentwicklung, die sich unter anderem auch durch den Anpressdruck im Betriebszustand ergibt, die aus dem Stand der Technik bekannten Schichten nach verhältnismässig kurzer Betriebsdauer Risse bilden, die bis auf den beschichteten Grundkörper ausgedehnt sind. Durch diese Rissen können dann einerseits chemisch aggressiv wirkende Stoffe wie Fette, Säuren, Laugen und usw. eindringen und unmittelbar das Material des Grundkörpers, der häufig ein Metall ist, angreifen. Dadurch korrodiert der Grundkörper auch in der Umgebung des Risses unter der noch intakten Beschichtung, so dass diese sich in der Umgebung des Risses ablösen und / oder Verwerfungen bilden kann. Dadurch entstehen zwischen Beschichtung und Grundkörper freie Zwischenräume, in die zum Beispiel Feuchtigkeit, Fette oder andere Fremdstoffe eindringen können, so dass insbesondere beim Erwärmen die Schichten weiter abgehoben und die Beschichtung so zunehmend zerstört wird. Das wiederum hat zur Folge, dass der Grundkörper immer grossflächiger auch chemischen Angriffen ausgesetzt wird und so die Korrosion, die durch hohe Temperaturen natürlich noch zusätzlich beschleunigt wird, immer schneller fortschreitet und die Beschichtung insgesamt schliesslich relativ rasch sowohl ihre mechanische Schutzwirkung, als auch ihre guten Antihafteigenschaften verliert.

Es versteht sich, dass die zuvor exemplarisch für Haushaltsgegenstände, wie etwa für Kochutensilien, beschriebenen Probleme natürlich auch bei anderen entsprechend beschichteten Gegenständen, die mechanischen und / oder thermischen Belastungen ausgesetzt sind, zum Beispiel wie Sohlen von Bügeleisen, Rollen und Walzen und vielem anderen mehr, völlig analog auftreten und zu den entsprechenden Schädigungen führen können.

Es ist daher eine Aufgabe der Erfindung, ein beschichtetes Substrat mit einer verbesserten Hartschicht vorzuschlagen, das die aus dem Stand der Technik bekannten Nachteile vermeidet. Darüber hinaus ist es eine Aufgabe der Erfindung, ein Verfahren zur Herstellung eines entsprechenden beschichteten Substrats, sowie die Verwendung des Verfahrens zur Herstellung von beschichteten Gegenständen vorzuschlagen.

Die diese Aufgaben lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit ein beschichtetes Substrat, umfassend einen Grundkörper sowie eine auf einer Oberfläche des Grundkörpers vorgesehene Hartschicht, wobei die Hartschicht im wesentlichen denselben thermischen Ausdehnungskoeffizienten wie der Grundkörper hat.

Der Erfindung liegt die Erkenntnis zugrunde, dass die Ursache für die Rissbildung bei den aus dem Stand der Technik bekannten beschichteten Substraten im wesentlichen darauf zurückzuführen ist, dass das Material des Grundkörper und die Hartschicht, die auf einer Substratoberfläche des Grundkörpers aufgebracht ist, deutlich verschiedene thermische Ausdehnungskoeffizienten aufweisen. Das ist insbesondere dann der Fall, wenn der Grundkörper aus einem Metall besteht, beispielsweise wie bei einem Kochtopf oder bei einer Bratpfanne, deren Grundkörper aus Aluminiumguss bestehen kann, und die Hartbeschichtung zu wesentlichen Teilen zum Beispiel Aluminiumoxid oder Aluminiumoxid/Titanoxid umfasst, die typischerweise als 97/3-Hartbeschichtung bei den bekannten beschichteten Substraten, insbesondere bei der Beschichtung von Haushaltgeräten, Anwendnung finden. Beim Erhitzen eines so beschichteten Substrats, etwa einer Bratpfanne auf typischerweise bis zu 300°C, dehnt sich der metallische Grundkörper viel stärker aus, als die mit der Substratoberfläche fest verbundene Hartschicht, die, wenn sie beispielsweise aus einer keramischen oder oxidischen Schicht, bzw. aus einer Schicht die solche Materialien enthält, einen viel kleineren thermischen Ausdehnungskoeffizienten als der metallische Grundkörper hat. Dadurch bilden sich beim Erwärmen ganz erhebliche mechanische Spannungen im beschichteten Substrat aus, die letztlich dazu führen, dass die im Verhältnis zum metallischen Grundkörper sehr spröde Hartschicht reisst, während der metallische Körper die elastische Spannungsenergie im wesentlichen aufnehmen kann, ohne Schäden davonzutragen.

Erfindungsgemäss wird somit ein solches Material für die Hartschicht gewählt, so dass die aufgebrachte Hartschicht auf der Substratoberfläche des Grundkörpers im wesentlichen denselben thermischen Ausdehnungskoeffizienten wie der Grundkörper selbst aufweist.

Das Material des Grundkörpers eines zu beschichtenden Substrats, also beispielsweise der Grundkörper eines Haushaltsgerätes, wie eine Bratpfanne, ein Kochtopf, die Sohle eines Bügeleisens oder auch der Grundkörper einer Walze oder einer Rolle umfasst dabei in einer bevorzugten Ausführungsform ein Metall oder eine Metallegierung, insbesondere unter anderem Stahl, Aluminium oder Kupfer.

Die Hartschicht, die erfindungsgemäss im wesentlichen denselben thermischen Ausdehnungskoeffizienten wie der Grundkörper hat, ist dabei bis auf Verunreinigungen eine Legierung aus dem Metall des Grundkörpers und Silizium.

Es hat sich nämlich gezeigt, dass eine Hartschicht, die im wesentlichen aus dem Metall des Grundkörpers unter Zugabe von Silizium aufgebaut ist, eine genügend hohe Resistenz gegen mechanische Beanspruchungen, wie Schneiden, Kratzen und / oder Zugbelastungen an der Oberfläche der Hartschicht aufweist, wobei sich gleichzeitig der thermische Ausdehnungskoeffizient dieser Hartschicht nur unwesentlich von dem des Grundkörpers unterscheidet. Dabei wird durch eine geeignete Wahl des Siliziumanteils in der Hartschicht gleichzeitig die Härte der Schicht, das heisst deren Resistenz gegen mechanische Belastungen und die Anpassung des thermischen Ausdehnungskoeffizienten an denjenigen des Grundkörpers optimiert.

Dabei bedeutet die Feststellung, dass die Hartschicht im wesentlichen denselben thermischen Ausdehnungskoeffizienten wie der Grundkörper hat, dass sich innerhalb des Temperaturbereichs, in dem das beschichtete Substrat, also beispielsweise das Haushaltsgerät oder die Walze, betrieben wird, die unterschiedliche Dehnung von Grundkörper und Hartschicht nicht dazu führt, dass in der Hartschicht Risse entstehen. Dabei wird durch geeignete Wahl des Siliziumanteils in der Hartschicht erreicht, dass sich die thermischen Ausdehnungskoeffizienten von Hartschicht und Grundkörper maximal um 30%, bevorzugt um weniger als 20% unterscheiden. Im Speziellen unterscheiden sich die thermischen Ausdehnungskoeffizienten um nicht mehr als maximal 10%.

In einem besonders bevorzugten Ausführungsbeispiel besteht der Grundkörper aus Aluminium, einer Aluminiumverbindung oder einer Aluminiumlegierung, zum Beispiel aus einem Aluminiumguss und die Hartschicht besteht bis auf Verunreinigungen aus einer Aluminium-Silizium-Legierung. Dabei liegt der Metallgehalt der Hartschicht, insbesondere der Aluminiumgehalt der Hartschicht zwischen 60% und 100%. In einem für die Praxis besonders wichtigen Beispiel liegt der Metallgehalt der Hartschicht, insbesondere der Aluminiumgehalt der Hartschicht zwischen 82% und 90%, bevorzugt zwischen 86% und 90%.

Ist der Grundkörper aus Aluminiumguss und liegt der Aluminiumgehalt der Hartschicht bei ca. 86%, Rest bis auf Verunreinigungen Silizium, so kann der thermische Ausdehnungskoeffizient des Grundkörpers zum Beispiel zwischen 5 · 10⁻⁶ / K und 50 · 10⁻⁶ / K, bevorzugt zwischen 18 · 10⁻⁶ / K und 28 · 10⁻⁶ / K und im besonderen bei ca. 20 · 10⁻⁶ / K liegen (K steht für die Temperatureinheit Kelvin). Der entsprechende thermische Ausdehnungskoeffizient der Aluminium/Silizium Hartschicht unterscheidet sich dann von dem Wert des Ausdehnungskoeffizienten des Grundkörpers ca. um 15 · 10⁻⁶ / K, bevorzugt um weniger als 10 · 10⁻⁶ / K. Im Speziellen unterscheiden sich die Ausdehnungskoeffizienten um nicht mehr als maximal 5 · 10⁻⁶ / K.

Besteht in einem speziellen Ausführungsbeispiel der Grundkörper aus einem Aluminiumguss mit einem thermischen Ausdehnungskoeffizienten von ca. 20 · 10⁻⁶ / K, so liegt ein besonders bevorzugter Wert für den thermischen Ausdehnungskoeffizienten der Hartschicht mit ca. 86% Aluminium, Rest bis auf Verunreinigungen Silizium, zwischen 18 · 10⁻⁶ / K und 22 · 10⁻⁶ / K.

Es versteht sich, dass auf einer Oberfläche der Hartschicht, die nicht im direkten Kontakt zum Grundkörper des Substrats steht, mindestens eine weitere Hartstoffschicht, insbesondere aus Aluminiumoxid oder Aluminiumoxid/Titanoxid vorgesehen sein kann. Diese Hartschicht kann insbesondere eine 97/3-Schicht (97% Al₂O₃ und 3% TiO₂) sein, die bekanntermassen einen guten Schutz gegen mechanische Beanspruchungen bietet. Durch Aufbringen von ein oder mehreren zusätzlichen Hartstoffschichten auf die Hartschicht des Grundkörpers, wird die mechanische Belastbarkeit an einer Aussenfläche der Hartstoffschicht, insbesondere deren Resistenz gegen Schnitt-, Kratz, Zug- und Druckbelastungen noch weiter gesteigert.

Zur Verbesserung der Antihafteigenschaften, was insbesondere bei Haushaltsgeräten zum Kochen, Braten und Backen, oder bei Bügeleisen oder bei Walzen zum Walzen von Folien eine entscheidende Rolle spielt, kann auf der Oberfläche der Hartschicht oder auf einer Aussenfläche einer eventuell vorhandenen zusätzlichen Hartstoffschicht eine Antihaftschicht, insbesondere auf Polytetrafluorethylen (PTFE)-Basis vorgesehen sein. Insbesondere wenn die Antihaftschicht physiologisch unbedenklich sein muss, wie zum Beispiel bei Haushaltsgeräten zwingend notwendig, kann diese aus ca. 98% Polytetrafluorethylen, Rest verschiedene Harze, bestehen. Dabei kann in an sich bekannter Weise zur Verbesserung der Haftung der Antihaftschicht, die häufig auch als Top-Coat bezeichnet wird, auf der Oberfläche der Hartschicht oder auf einer Aussenfläche der Hartstoffschicht ein sogenannter Primer vorgesehen sein, der eine bessere Verbindung von Top-Coat und Oberfläche der Hartschicht oder der Hartstoffschicht garantiert. Typischerweise setzt sich der Primer beispielsweise aus Polyamidimid Harzen und einem Gemisch aus PFA (Polyfluoramid) und PTFE zusammen, wobei selbstverständlich auch Primer mit einer anderen geeigneten chemischen Zusammensetzung vorteilhaft Verwendung finden können.

Bei dem erfindungsgemässen Verfahren zum Herstellen eines beschichteten Substrats wird die Hartschicht und / oder die Hartstoffschicht mittels eines thermischen Spritzverfahrens, insbesondere durch Lichtbogenspritzen, Plasma- oder Drahtflammspritzen aufgetragen. Dabei kann die Wahl des konkreten Verfahrens unter anderem durch das Material des Grundkörpers und / oder durch das gewünschte Beschichtungsmaterial bestimmt sein.

Ist zur Verbesserung der Antihafteigenschaften eine Antihaftschicht vorgesehen, so kann vor dem Aufbringen der Antihaftschicht zur Verbesserung von deren Haftung die beschichtete Oberfläche des Grundkörpers, d.h. die Oberfläche der Hartschicht oder, falls vorhanden, die Aussenfläche der Hartstoffschicht mit einem Haftvermittler behandelt werden.

Nachdem die Antihaftschicht zum Beispiel mit einer Spritz- oder Lackiereinrichtung auf das beschichtete Substrat aufgetragen ist, wird die Antihaftschicht bei einer bevorzugten Ausführungsvariante des Verfahrens zur Fixierung in einem geeigneten Brennofen in an sich bekannter Weise eingebrannt.

Erfindungsgemäss wird das Verfahrens insbesondere zur Herstellung eines Haushaltsgerätes oder eines Küchengefässes mit einem Grundkörper, wie er zuvor eingehend beschrieben wurde, insbesondere zur Beschichtung einer Bügelfläche eines Bügeleisens oder eines Bratbodens einer Bratpfanne oder zur Herstellung einer Folienwalze verwendet.

Es versteht sich, dass sich die Erfindung nicht auf Grundkörper von Haushaltsgeräten oder Walzen, wie oben exemplarisch mehrfach erwähnt, allein beschränkt ist. Vielmehr bezieht sich die Erfindung ganz allgemein auf mit einer Hartschicht beschichtete Substrate, die insbesondere thermischen und mechanischen Belastungen ausgesetzt sein können, und wobei der thermische Ausdehnungskoeffizient von Hartschicht und Grundkörper sich nur unwesentlich unterscheiden, so dass in einem vorgebbaren Temperaturbereich, dem das Substrat im Betriebszustand ausgesetzt wird, Rissbildungen in der Hartschicht aufgrund unterschiedlicher thermischer Ausdehnung von Grundkörper und Hartschicht unterbleiben. Entsprechend bezieht sich auch das erfindungsgemässe Verfahren für die Herstellung eines beschichteten Substrats ganz allgemein auf Vorrichtungen solcher Art, sowie deren Verwendung.

Im folgenden wird die Erfindung wird an Hand der schematischen Zeichnung näher erläutert. Es zeigen:
- Fig. 1: eine Bratpfanne mit Hartschicht und Primer mit Top-Coat;
- Fig. 2: ein beschichtetes Substrat mit Hartstoffschicht und Primer mit Top-Coat.

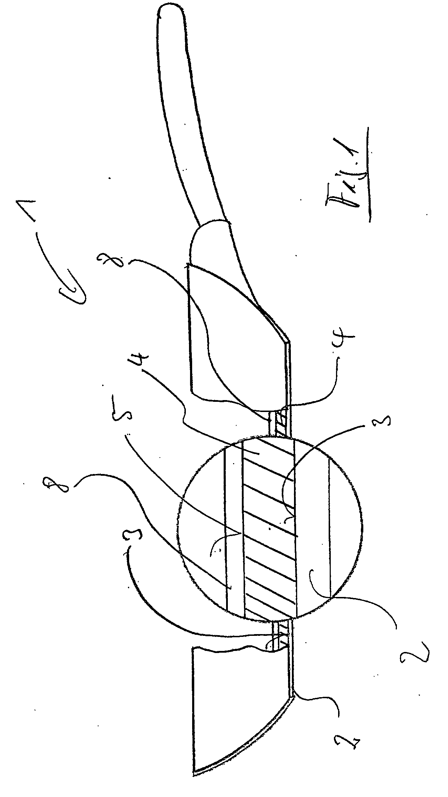

Fig. 1 zeigt in einer schematischen Darstellung ein beschichtetes Substrat, das im folgenden gesamthaft mit dem Bezugszeichen 1 bezeichnet wird, in Ausgestaltung als Bratboden 1 einer Bratpfanne mit Hartschicht und Top-Coat. Zur Verdeutlichung der Darstellung ist ein Bereich der beschichteten Substratoberfläche 3 vergrössert dargestellt.

Die Bratpfanne mit Bratboden 1 gemäss Fig. 1 besteht im wesentlichen aus einem metallischen Grundkörper 2, bevorzugt aus Aluminiumguss, einer Aluminiumlegierung oder einer Aluminiumverbindung. Es versteht sich, dass der Grundkörper 2 auch aus einem anderen Material, zum Beispiel aus Stahl, Edelstahl, Gusseisen, Kupfer oder anderen geeigneten Materialien aufgebaut sein kann.

Der Grundkörper 2 der Bratpfanne weist eine Substratoberfläche 3 auf, die erfindungsgemäss mit einer Hartschicht 4 versehen ist, die im wesentlichen denselben thermischen Ausdehnungskoeffizienten wie der Grundkörper 2 aufweist. Dabei besteht die Hartschicht 4 bis auf Verunreinigungen aus einer Legierung des Metalls des Grundkörpers 2 und Silizium. Bevorzugt umfasst der Grundkörper 2 der Bratpfanne Aluminium oder eine Aluminiumlegierung oder eine Aluminiumverbindung, wobei der Aluminiumgehalt in der Hartschicht 4 besonders bevorzugt zwischen 86% und 90% (Gewichts-Prozent) liegt, und der Rest im wesentlichen Silizium ist.

Zur Verbesserung der Antihafteigenschaften ist eine Oberfläche 5 der Hartschicht 4 mit einer Antihaftschicht 8 auf PTFE-Basis beschichtet, welche Antihaftschicht 8 als Bratfläche für ein Bratgut dient, wobei der Gehalt an Polytetraflourethylen ca. 98%, Rest diverse Harze, beträgt. Dadurch ist sichergestellt, dass die Antihaftschicht 8 in physiologischer Hinsicht unbedenklich ist.

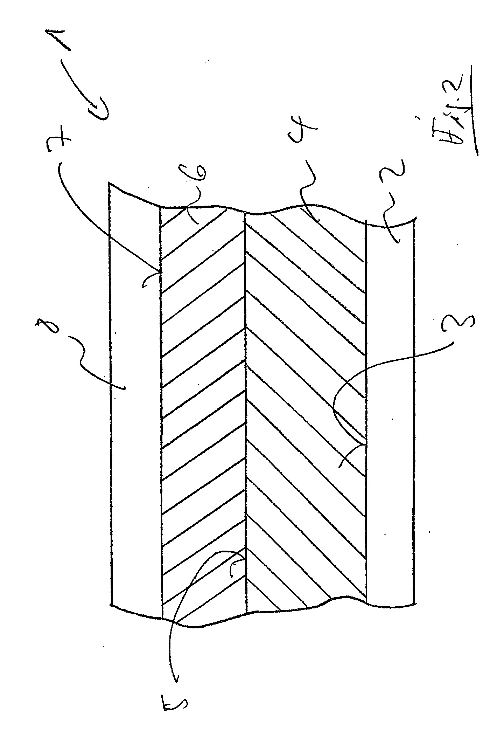

In Fig. 2 ist ein anderes Ausführungsbeispiel eines beschichteten Substrats 1 schematisch dargestellt. Auf der Substratoberfläche 3 des Grundkörpers 2 befindet sich die Hartschicht 4, die im wesentlichen denselben thermischen Ausdehnungskoeffizienten hat, wie der Grundkörper 2 selbst. Auf der Oberfläche 5 der Hartschicht 4 ist eine weitere Hartstoffschicht 6 vorgesehen, die zum Beispiel aus Aluminiumoxid oder Aluminiumoxid/Titanoxid aufgebaut sein kann und insbesondere auch eine 97/3-Schicht sein kann. Die aus den zuletzt genannten Materialien aufgebaute Hartstoffschicht 6 kann gegen mechanische Beanspruchungen wie Kratzen, Schneiden, usw. noch widerstandsfähiger sein als die Hartschicht 4. Somit ist eine zusätzliche Beschichtung mit einer oder mehreren Hartstoffschichten 6, die aus gleichen oder verschiedenen Materialien bestehen können, immer dann von besonderer Relevanz, wenn es sich um Gegenstände handelt, die durch mechanische Einwirkungen aller Art im Gebrauch oder im Betriebszustand sehr stark belastet sind.

Zur Verbesserung der Antihafteigenschaften kann auch, wie in Fig. 2 dargestellt, auf einer Aussenfläche 7 der Hartstoffschicht 6 eine Antihaftschicht 8 vorgesehen sein.

Obwohl die Antihaftschicht 8 in vielen Fällen, zum Beispiel bei Brat-, Backoder Kochgeschirr, oder bei Walzen zum Auswalzen von Folien, von besonderem Vorteil ist, kann die Antihaftschicht auf einem erfindungsgemässen beschichteten Substrat 1 selbstverständlich auch fehlen, wenn die Antihafteigenschaften keine Rolle spielen, oder diese sogar aus bestimmten Gründen gar nicht gewünscht sind und eher unvorteilhaft wären.

Das erfindungsgemässe beschichtete Substrat, beispielsweise in Ausgestaltung eines Haushaltsgeräts wie einer Bratpfanne, hält somit auch sehr starken thermischen Belastungen, zum Beispiel durch Erhitzen beim Kochen, Backen oder Braten über sehr lange Zeiträume problemlos Stand, wobei gleichzeitig höchste Widerstandskraft gegenüber mechanischen Beschädigungen, etwa durch Kratzen, Schneiden usw. gewährleistet ist. Die Bildung von Rissen in der Hartschicht, die sich bis auf den beschichteten Grundkörper ausdehnen können und bei den aus dem Stand der Technik bekannten Schichten ihre Ursache insbesondere in stark unterschiedlichen thermischen Ausdehnungskoeffizienten haben, wird im wesentlichen vermieden. Dadurch wird die Lebensdauer der erfindungsgemäss beschichteten Substrate und Gegenstände gegenüber dem Stand der Technik deutlich erhöht und im Vergleich zum Stand der Technik über deutlich längere Zeiträume eine gleichbleibende Qualität der Schichten und Funktionsflächen gesichert.

## Patentansprüche

1. Beschichtetes Substrat, umfassend einen Grundkörper (2) sowie eine auf einer Substratoberfläche (3) des Grundkörpers (2) vorgesehene Hartschicht (4), **dadurch gekennzeichnet, dass** die Hartschicht (4) im wesentlichen denselben thermischen Ausdehnungskoeffizienten wie der Grundkörper (2) hat.

2. Beschichtetes Substrat nach Anspruch 1, wobei das Material des Grundkörpers (2) ein Metall oder eine Metallegierung, insbesondere Stahl, Aluminium oder Kupfer umfasst.

3. Beschichtetes Substrat nach Anspruch 1 oder 2, wobei die Hartschicht (4) bis auf Verunreinigungen eine Legierung aus dem Metall des Grundkörpers (2) und Silizium ist.

4. Beschichtetes Substrat nach einem der vorangehenden Ansprüche, wobei der Grundkörper (2) aus Aluminium, einer Aluminiumverbindung oder einer Aluminiumlegierung besteht und die Hartschicht (4) bis auf Verunreinigungen eine Aluminium-Silizium-Legierung ist.

5. Beschichtetes Substrat nach einem der vorangehenden Ansprüche, wobei der Metallgehalt der Hartschicht (4), insbesondere der Aluminiumgehalt der Hartschicht (4) zwischen 60% und 100% liegt.

6. Beschichtetes Substrat nach einem der vorangehenden Ansprüche, wobei der Metallgehalt der Hartschicht (4), insbesondere der Aluminiumgehalt der Hartschicht (4) zwischen 82% und 90%, bevorzugt zwischen 86% und 90% liegt.

7. Beschichtetes Substrat nach einem der vorangehenden Ansprüche, wobei auf einer Oberfläche (5) der Hartschicht (4) mindestens eine weitere Hartstoffschicht (6), insbesondere aus Aluminiumoxid oder Aluminiumoxid/Titanoxid vorgesehen ist.

8. Beschichtetes Substrat nach einem der vorangehenden Ansprüche, wobei auf der Oberfläche (5) der Hartschicht (4) oder auf einer Aussenfläche (7) der Hartstoffschicht (6) eine Antihaftschicht (8), insbesondere auf Polytetrafluorethylen (PTFE)-Basis vorgesehen ist.

9. Verfahren zum Herstellen eines beschichteten Substrats nach einem der vorangehenden Ansprüche, wobei die Hartschicht (4) und / oder die Hartstoffschicht (6) mittels eines thermischen Spritzverfahrens, insbesondere durch Lichtbogenspritzen, Plasmaspritzen oder Drahtflammspritzen aufgetragen wird.

10. Verfahren nach Anspruch 9, wobei vor dem Aufbringen der Antihaftschicht (8) zur Verbesserung der Haftung die beschichtete Substratoberfläche (3) des Grundkörpers (2) mit einem Haftvermittler behandelt wird.

11. Verfahren nach Anspruch 9 oder 10, wobei die Antihaftschicht (8) eingebrannt wird.

12. Verwendung eines Verfahrens nach einem der Ansprüche 9 bis 11 zur Herstellung eines Haushaltsgerätes oder eines Küchengefässes mit einem Grundkörper (2) nach einem der Ansprüche 1 bis 8, insbesondere zur Beschichtung einer Bügelfläche (1) eines Bügeleisens oder eines Bratbodens (1) einer Bratpfanne.

13. Verwendung eines Verfahrens nach einem der Ansprüche 9 bis 11 zur Herstellung einer Folienwalze mit einem Grundkörper (2) nach einem der Ansprüche 1 bis 8.
